Europäisches Patentamt

European Patent Office

Office européen des brevets

(11) Numéro de publication: **0 265 569**
**A1**

(12) **DEMANDE DE BREVET EUROPEEN**

(21) Numéro de dépôt: **86420264.3**

(22) Date de dépôt: **27.10.86**

(51) Int. Cl.⁴ **F16L 37/28**

(43) Date de publication de la demande:
**04.05.88 Bulletin 88/18**

(84) Etats contractants désignés:
**AT BE CH DE ES FR GB IT LI LU NL SE**

(71) Demandeur: **PARKER HANNIFIN RAK**
**Z.I. du Mont Blanc**
**F-74100 Annemasse(FR)**

(72) Inventeur: **Badoureaux, Jean-Pierre**
**27 rue du Saget**
**F-74100 Annemasse(FR)**

(74) Mandataire: **Maureau, Pierre et al**
**Cabinet GERMAIN & MAUREAU B.P. 3011**
**F-69392 Lyon Cédex 03(FR)**

(54) **Coupleur à clapets à décompression.**

㊐ Ce coupleur à clapets est du type comportant un corps tubulaire externe (2) équipé, à l'une (2") des ses extrémités, de moyens (3) de raccordement rigide à une source de fluide sous pression, à l'autre extrémité duquel est aménagé l'embout femelle (7') du coupleur, cet embout femelle (7'), qui contient le clapet (14) situé du côté du circuit d'alimentation, étant agencé pour permettre l'engagement et le verrouillage, dans son alésage, de l'embout mâle (11) de ce coupleur qui, de son côté, contient le clapet (13) situé du côté de l'utilisation du fluide sous pression.

La tête du clapet (14) situé du côté de l'alimentation présente un alésage (14a) supportant un clapet auxiliaire (22) dont le ressort de rappel (25) est plus faible que celui (15) du clapet principal 514) et qui est apte à être repoussé en position d'ouverture par le clapet (13) de l'embout mâle (11), dès que ce dernier exerce une poussée contre lui, ce clapet auxiliaire (22) étant disposé de manière que son ouverture mette en communication les espaces (28,31) situés de part et d'autre du siège (18) du clapet principal (14).

FIG.2

## "Coupleur à clapets à décompression"

La présente invention concerne un coupleur à clapets à décompression.

Cette invention concerne donc un coupleur à clapets du type comportant un corps tubulaire externe équipé, à l'une de ses extrémités, de moyens de raccordement rigide à une source de fluide sous pression, à l'autre extrémité duquel est aménagé l'embout femelle du coupleur et cet embout femelle, qui contient le clapet situé du côté du circuit d'alimentation, étant agencé pour permettre l'engagement et le verrouillage, dans son alésage, de l'embout mâle de ce coupleur qui, de son côté, contient le clapet situé du côté de l'utilisation du fluide sous pression.

Lors de la connexion de l'embout mâle dans l'embout femelle d'un tel coupleur, il faut éviter que le clapet situé du côté de l'utilisation, c'est-à-dire dans l'embout mâle, ne s'ouvre avant celui situé du côté de l'alimentation, c'est-à-dire dans l'embout femelle. Ce but est atteint le plus souvent car, généralement, il règne, dans le circuit d'utilisation, une pression résiduelle qui assiste le ressort de rappel du clapet de l'embout mâle pour le maintenir en position de fermeture. Cependant, cet avantage est annulé s'il règne, dans le circuit d'alimentation, une pression résiduelle supérieure à celle du circuit d'utilisation car, dans ce cas, le clapet du circuit d'utilisation sera ouvert avant celui du circuit d'alimentation.

On connaît par le brevet français n° 69 41086 (2 024 539), un coupleur de ce type dans lequel, au clapet de l'élément femelle situé du côté de l'alimentation, est associé un clapet auxiliaire destiné à être ouvert avant les clapets principaux situés, respectivement, du côté de l'alimentation et du côté de l'utilisation. Cette disposition, en faisant chuter la pression résiduelle régnant éventuellement dans le circuit d'alimentation, a pour but d'assurer l'ouverture du clapet principal situé du côté de l'alimentation avant celle du clapet principal situé du côté de l'utilisation.

Pour obtenir l'ouverture du clapet auxiliaire avant celle des clapets principaux dans le coupleur selon ce brevet français, le ressort de rappel en position de fermeture du clapet auxiliaire est choisi plus puissant que ceux des clapets principaux qui sont supposés, tous deux, être assistés par la haute pression résiduelle régnant éventuellement en amont de chacun d'eux.

Le ressort de rappel du clapet auxiliaire, qui est nécessairement plus puissant que ceux des clapets principaux et qui doit être logé à l'intérieur d'un alésage du clapet principal situé du côté de l'alimentation, impose donc à ce dernier une grande dimension et renchérit donc considérablement le coût de fabrication de ce coupleur.

En outre, pour engager l'embout mâle portant le clapet principal situé du côté de l'utilisation dans l'embout femelle, s'il règne une haute pression résiduelle du côté de l'alimentation, il est nécessaire de vaincre la puissance du ressort de rappel du clapet auxiliaire, ce qui ne facilite pas cet engagement.

La présente invention vise à remédier à cet invonvénient en partant du principe qu'un débit très faible suffit à faire chuter la pression résiduelle dans le circuit d'alimentation. A cet effet, dans le coupleur qu'elle concerne et qui est du type précité, le ressort de rappel du clapet auxiliaire est plus faible que celui du clapet principal, situé du côté de l'alimentation, auquel il est associé, en vue de lui permettre d'être repoussé en position d'ouverture par le clapet de l'embout mâle, situé du côté de l'utilisation, dès que ce dernier exerce une poussée contre lui et, par conséquent, avant l'ouverture du clapet principal de l'embout femelle auquel il est associé. Ainsi, l'ouverture du clapet auxiliaire avant celle des deux autres clapets du coupleur est obtenue quelles que soient les valeurs des autres pressions résiduelles régnant éventuellement en amont de l'un et/ou de l'autre des clapets principaux.

Il faut noter d'ailleurs que le ressort de rappel du clapet auxiliaire n'a pour but que de ramener ce dernier en position de fermeture, de telle sorte que sa puissance peut être choisie à une valeur très faible. Il pourrait d'ailleurs être supprimé dans le cas où le coupleur est utilisé verticalement avec l'embout femelle situé au-dessus de l'embout mâle, la gravité jouant alors le rôle de ressort de rappel en position de fermeture du clapet auxiliaire.

Le verrouillage de l'embout mâle dans l'embout femelle peut être obtenu par vissage du premier dans le second. Cette disposition avantageuse peut aussi s'appliquer aux coupleurs du type précité dans lequel le verrouillage de l'embout mâle dans l'embout femelle est obtenu à l'aide de billes de verrouillage, c'est-à-dire aux coupleurs du type précité dans lequel le corps tubulaire externe loge un élément tubulaire axialement mobile dans les deux sens et dont l'extrémité antérieure correspondant à l'extrémité libre du corps tubulaire, qui constitue l'embout femelle du coupleur, porte, dans une rangée annulaire de perforations leur servant de logements, des billes de verrouillage destinées à être engagées et maintenues dans une gorge annulaire externe prévue, à cet effet, au voisinage de l'extremité de l'embout mâle associé du coupleur, un ressort de rappel tendant à remener cet élément tubulaire dans une position intermédiaire stable dans laquelle la rangée annulaire de perforations logeant les billes de verrouillage coïncide axialement avec une nervure radiale interne à flancs coniques du corps tubulaire pour maintenir les billes en position de verrouillage, c'est-à-dire en saillie radialement à l'intérieur de l'alésage de l'élément tubulaire mobile et ce dernier portant, du côté de son extrémité postérieure, un clapet normalement maintenu fermé par un ressort et destiné à être reculé en position ouverte par le clapet de l'embout mâle, lorsque ce dernier est engagé dans l'embout femelle.

On connaît, par la demande de brevet français n° 85 07821, de la Demanderesse, un coupleur de ce type dans lequel la course d'ouverture du clapet du circuit d'alimentation est temporairement augmentée pour permettre un verrouillage de l'embout mâle dans l'embout femelle, avant l'ouverture du clapet du circuit d'utilisation, cette ouverture étant commandée par la pression du fluide d'alimentation, lors de l'ouverture du circuit d'alimentation.

La présente invention peut évidemment s'appliquer tout aussi bien à ce type de coupleurs. Dans ce cas, la tête du clapet principal du circuit d'alimentation présente un alésage coaxial à sa tige tubulaire et servant de guide à la tige du clapet auxiliaire et dont le diamètre, inférieur à celui de l'alésage de la tige du clapet principal, crée un épaulement constituant le siège du clapet auxiliaire dont la tête est logée dans l'alésage de la tige du clapet principal, la longueur de la tige du clapet auxiliaire étant supérieure à la longueur de l'alésage de la tête du clapet principal, et des orifices radiaux ménagés dans la paroi de la tête et de la tige du clapet principal faisant communiquer l'alésage de la tête et celui de la tige avec, respectivement, les espaces de l'alésage de l'élément tubulaire mobile situés en avant et en arrière du siège du clapet principal.

De toute façon, l'invention sera bien comprise à l'aide de la description qui suit, en référence au dessin schématique annexé représentant, à titre d'exemple non limitatif, une forme d'exécution de ce coupleur qui, dans cet exemple, est du type à verrouillage par billes :

Figure 1 en est une vue de côté en élévation avec demi-coupe axiale, montrant le corps de ce coupleur, avant engagement de l'embout mâle, avec son embout femelle au repos et son clapet principal et son clapet auxiliaire en position de fermeture ;

Figure 2 est une vue similaire à figure 1 montrant ce coupleur au début de l'engagement de l'embout mâle, l'embout femelle étant toujours en position normale de repos, avec son clapet principal en position de fermeture mais son clapet auxiliaire en position d'ouverture ;

Figure 3 est une vue similaire aux figures 1 et 2 montrant l'embout mâle et l'embout femelle de ce coupleur verrouillés l'un dans l'autre, avec le clapet principal et le clapet auxiliaire de l'embout femelle en position d'ouverture.

Comme le montre le dessin, le coupleur de l'invention est un coupleur à clapets d'un type connu, comportant un corps tubulaire externe (2) muni, à son extrémité postérieure (2″), d'un embout fileté (3) équipé d'un joint torique (4) permettant son raccordement étanche à une source de fluide sous pression, non représentée sur le dessin.

Dans l'exemple illustré sur le dessin, pour des raisons de possibilités de montage, le corps tubulaire (2) est en fait composé de deux éléments coaxiaux, l'un antéieur (2a), l'autre postérieur (2b), assemblés bout à bout à l'aide d'une bague intérieure filetée (5).

Au voisinage de son extrémité antérieure (2'), le corps tubulaire (2) présente une nervure radiale interne (6) à flancs coniques, l'un interne (6a) et l'autre externe (6b), dont la fonction sera expliquée ultérieurement.

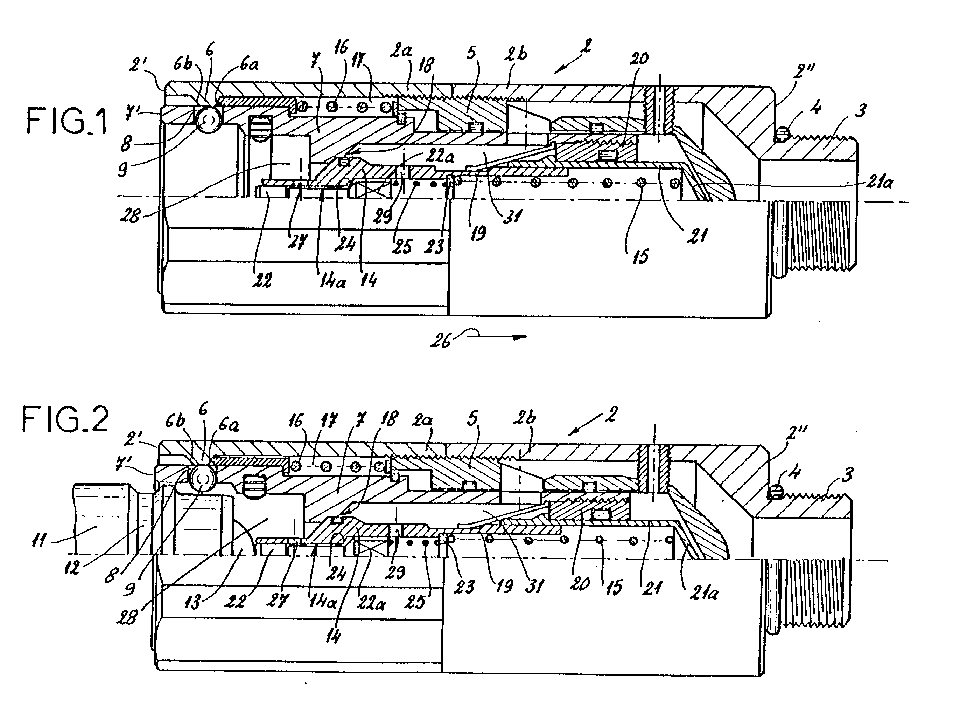

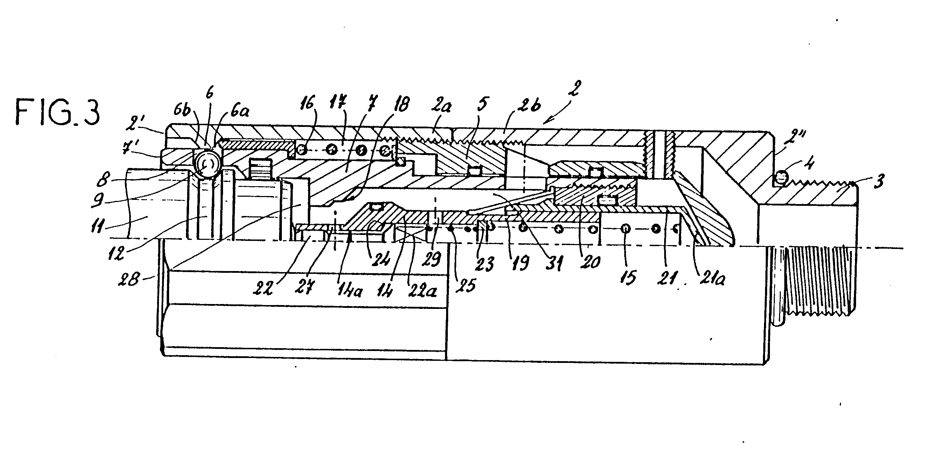

A l'intérieur du corps (2) est monté, axialement mobile dans les deux sens, un élément tubulaire interne (7) dont l'extrémité antérieure (7') correspondant à l'extrémité antérieure (2') du corps (2) constitue l'embout femelle du coupleur et porte, dans une rangée annulaire de perforations (8) leur servant de logements, des billes de verrouillage (9) normalement maintenues en saillie radialement à l'intérieur de l'alésage de l'extrémité antérieure (7') de l'élément tubulaire (7) par la nervure (6) du corps (2), le diamètre des billes (9) étant supérieur à l'épaisseur de la paroi de l'élément tubulaire (7) dans la zone de la rangée annulaire de perforations (8). Il faut noter que chaque perforation (8) présente, à son extrémité radialement interne, un rétreint s'opposant au libre passage des billes (9). Ces billes sont destinées à verrouiller, de manière connue en soi, l'embout mâle (11) de ce coupleur, visible sur les figures 2 et 3, par engagement dans une gorge périphérique externe (12) prévue au voisinage de l'extrémité libre de l'embout mâle (11).

A chacun des embouts mâle (11) et femelle (7') de ce coupleur est associé un clapet, respectivement (13) et (14), normalement maintenu en position de fermeture par un ressort de rappel. Sur le dessin, seul le ressort de rappel (15) du clapet (14) associé à l'embout femelle (7') est visible. Chacun de ces clapets (13) et (14) est destiné à prendre appui contre l'autre clapet lors de l'engagement de l'embout mâle (11) dans l'embout femelle (7') de manière à provoquer son ouverture et son maintien en position d'ouverture tant que l'embout mâle (11) reste verrouillé dans l'embout femelle (7').

Un ressort (16), entourant l'élément tubulaire mobile (7) et par conséquent logé dans un intervalle annulaire (17) séparant l'élément tubulaire (7) du corps (2), tend à maintenir ce dernier dans une position intermédiaire stable, illustrée sur les figures 1 à 3 , position dans laquelle les rangées annulaires de perforations (8) coïncident axialement avec la nervure (6) et par conséquent dans laquelle les billes (9) sont maintenues par la nervure (6) en position radialement intérieure de verrouillage.

A cet effet, le ressort (16) prend appui contre deux paires d'épaulements équidistants en regard l'un de l'autre, l'une de ces paires étant ménagée sur la face cylindrique externe de l'élément tubulaire mobile (7) tandis que l'autre paire est ménagée dans la face cylindrique interne du corps tubulaire (2).

Comme le montre le dessin et notamment la figure 1, la tête du clapet (14), dénommé ci-après clapet principal, dont le siège (18) est aménagé dans l'alésage de l'élément tubulaire (7) et dont la tige (19) tubulaire loge son ressort de rappel (15), présente elle-même un alésage (14a) coaxial à la tige (19) et dans lequel est monté coulissant un clapet auxiliaire (22). L'alésage (14a) de la tête du clapet principal (14) est d'un diamètre inférieur à celui de sa tige (19), de sorte qu'il en résulte un épaulement (24) destiné à servir de siège à la tête (22a) du clapet auxiliaire (22). Le ressort de rappel (25) tend normalement à maintenir la tête (22a) du clapet auxiliaire (22) en appui contre son siège (24). Dans cette position de fermeture, la tige du clapet auxiliaire (22) a une longueur lui permettant de faire saillie au-delà de l'extrémité libre de l'alésage (14a) de la tête du clapet (14), de manière à être actionnée, en position d'ouverture, par le clapet (14) de l'embout mâle (11) lors de l'introduction de ce dernier dans l'embout femelle (7'), avant tout déplacement axial du clapet principal (14) et de l'élément tubulaire (7).

A cet effet, le ressort de rappel (25) du clapet auxiliaire (22) est moins puissant que le ressort de rappel (15) du clapet principal (14), que le ressort de rappel (16) de l'élément tubulaire (7) et que le ressort de rappel, non visible sur le dessin, du clapet (13) de l'embout mâle (11).

Dans l'exemple illustré sur le dessin, l'extrémité postérieure de la tige (19) du clapet principal (14) est montée coulissante dans un manchon (21), lui-même monté coulissant dans une bague de guidage (20) portée par l'élément tubulaire mobile (7). Le ressort de rappel (15) du clapet principal (14) est comprimé entre le fond (21a) de ce manchon (21) et une nervure radiale intérieure (23) formée dans l'alésage de la tige (19) par un circlips. La face antérieure de cette nervure (23) sert de point d'appui postérieur au ressort de rappel (25) du clapet auxiliaire (22).

Il faut noter que la paroi de l'alésage (14a) de la tête du clapet principal (14) présente un orifice radial (27) ou une rangée d'orifices, faisant communiquer cet alésage (14a) avec l'espace (28) de l'alésage de l'élément tubulaire (7) situé en avant du clapet principal (14). De son côté, la paroi de l'alésage de la tige (19) du clapet principal (14) présente un orifice radial (29) ou plusieurs orifices radiaux, faisant communiquer cet alésage avec l'espace (31) de l'alésage de l'élément tubulaire mobile (7) situé en arrière du clapet principal (14).

Au repos, comme illustré sur la figure 1, le clapet principal (14) et le clapet auxiliaire (22) sont en position de fermeture et aucune communication n'est possible entre les espaces (28) et (31). Dès qu'après introduction de l'embout mâle (11) dans l'embout femelle (7'), le clapet (13) de l'embout mâle entre en contact avec la tige du clapet auxiliaire (22), ce dernier est déplacé en position d'ouverture dans le sens de la flèche (26), sans toutefois provoquer l'ouverture du clapet principal (14) par suite de la faiblesse du ressort de rappel (25) par rapport à celle du ressort (15). C'est aussi en raison de cette faiblesse du ressort (25) par rapport au ressort de rappel du clapet (13) que celui-ci peut agir tout en restant en position de fermeture.

Dans cette position, illustrée sur la figure 2, on voit que le fluide peut circuler librement entre les espaces (28) et (31). Il en résulte donc que si, lors de la connexion de ce coupleur, il règne, dans le circuit d'alimentation, c'est-à-dire entre le raccord (3) et l'espace (31), une pression supérieure à celle régnant dans le circuit d'utilisation, il est possible, sans qu'il n'en résulte aucune conséquence nuisible au fonctionnement de ce coupleur, de faire chuter instantanément la pression du circuit d'alimentation avant l'achèvement de la connexion du coupleur. En effet, dès l'ouverture du clapet auxiliaire (22), comme illustré sur la figure 2, le fluide sous pression contenu dans l'espace (31), ainsi que dans la partie amont du circuit d'alimentation, pouvant s'écouler dans l'espace (28) situé dans l'embout femelle (7'), cette pression du circuit d'alimentation chute instantanément puisque, à ce moment, la source de pression est encore isolée par rapport au circuit d'alimentation.

L'engagement de l'embout mâle (11) dans l'embout femelle (7'), sans ouverture du clapet (13) de l'embout mâle (11), peut alors être normalement poursuivi jusqu'à son verrouillage à l'aide des billes (9) ; il suffit pour cela que la course de recul du clapet principal (14) le permette.

Dans l'exemple illustré sur le dessin, cette course de recul est autorisée, au moins lors de la connexion du coupleur, par une disposition conforme à celle décrite dans la demande de brevet français N°85 07821 de la Demanderesse.

Après verrouillage de l'embout mâle (11) dans l'embout femelle (7') et ouverture du circuit d'alimentation, les organes du coupleur (2) occupent leur position normale de fonctionnement, telle qu'illustrée sur la figure 3, position dans laquelle les trois clapets, à savoir le clapet (13) de l'embout mâle (11), le clapet principal (14) de l'embout femelle (7') et le clapet auxiliaire (22), sont en position d'ouverture.

On conçoit aisément que, lors du retrait de l'embout mâle (11) hors de l'embout femelle (7') par simple traction dirigée vers l'extérieur, c'est-à-dire dans le sens inverse de celui illustré par la flèche (26), tous les organes logés dans le corps (2) de ce coupleur reprennent leur position normale de repos, telle qu'illustrée sur la figure 1.

**Revendications**

1.-Coupleur à clapets à décompression, du type comportant un corps tubulaire externe (2) équipé, à l'une (2") de ses extrémités, de moyens (3) de raccordement rigide à une source de fluide sous pression et à l'autre extrémité duquel est ménagé l'embout femelle (7') du coupleur, cet embout femelle (7'), qui contient le clapet (14), situé du côté du circuit d'alimentation, et son ressort de rappel (15), étant agencé pour permettre l'engagement et le verrouillage, dans son alésage, de l'embout mâle (11) de ce coupleur qui, de son côté, contient le clapet (13) situé du côté de l'utilisation du fluide sous pression, la tête du clapet (14), située du côté de l'alimentation, présentant un alésage (14a) supportant un clapet auxiliaire (22) disposé de manière que son ouverture mette en communication les espaces (28) et (31) situés de part et d'autre du siège (18) du clapet principal (14), et étant constamment soumis à l'action d'un ressort de rappel (25) en position de fermeture, caractérisé en ce que le ressort de rappel (25) du clapet auxiliaire (22) est plus faible que celui du clapet principal (14) en vue de lui permettre d'être repoussé en position d'ouverture par le clapet (13) de l'embout mâle (11) dès que ce dernier exerce une poussée contre lui et, par conséquent, avant l'ouverture du clapet principal (14).

2.-Coupleur à clapets selon la revendication 1, caractérisé en ce que l'embout mâle est verrouillé dans l'embout femelle par vissage.

3.-Coupleur selon la revendication 1, caractérisé en ce que l'embout mâle (11) est verrouillé dans l'embout femelle (7') par des billes de verrouillage (9).

4.-Coupleur à clapets selon la revendication 3, du type dans lequel le corps tubulaire externe (2) loge un élément tubulaire (7) axialement mobile dans les deux sens et dont l'extrémité antérieure (7') correspondant à l'extrémité libre (2') du corps tubulaire (2), qui constitue l'embout femelle du coupleur, porte, dans une rangée annulaire de perforations (8) leur servant de logements, des billes de verrouillage (9) destinées à être engagées et maintenues dans une gorge annulaire externe (12) prévue, à cet effet, au voisinage de l'extrémité de l'embout mâle (11) associé du coupleur, un ressort (16) de rappel tendant à ramener cet élément tubulaire (7) dans une position intermédiaire stable dans laquelle la rangée annulaire de perforations (8) logeant les billes de verrouillage (9) coïncide axialement avec une nervure radiale interne (6) à flancs coniques (6a,6b) du corps tubulaire (2) pour maintenir les billes (9) en position de verrouillage, c'est-à-dire en saillie radialement à l'intérieur de l'alésage de l'élément tubulaire mobile (7) et ce dernier portant, du côté de son extrémité postérieure, un clapet (14) normalement maintenu fermé par un ressort de rappel (15) et destiné à être reculé en position ouverte par le clapet (13) logé dans l'embout mâle (11), lorsque ce dernier est engagé dans l'embout femelle (7'), caractérisé en ce que la tête du clapet (14) situé du côté du circuit d'alimentation, dont le siège (18) est aménagé dans l'alésage de l'élément tubulaire mobile (7) et dont la tige (19) est tubulaire, porte un clapet auxiliaire (22) dont le ressort de rappel (25) est plus faible que celui (15) du clapet principal (14) et qui est apte à être repoussé en position d'ouverture par le clapet (13) de l'embout mâle (11), dès que ce dernier exerce une poussée contre lui, ce clapet auxiliaire (22) étant disposé de manière que son ouverture mette en communication les espaces (28,31) de l'alésage de l'élément tubulaire mobile (7) situés de part et d'autre du siège (18) du clapet principal (14).

5.-Coupleur selon la revendication 4, caractérisé en ce que la tête du clapet principal (14) du circuit d'alimentation présente un alésage (14a) coaxial à sa tige (19), servant de guide à la tige du clapet auxiliaire (22) et dont le diamètre, inférieur à celui de l'alésage de la tige (19) du clapet principal (14), crée un épaulement (24) constituant le siège du clapet auxiliaire (22) dont la tête (22a) est logée dans l'alésage de la tige (19) du clapet principal (14), la longueur de la tige du clapet auxiliaire (22) étant supérieure à la longueur de l'alésage (14a) de la tête du clapet principal (14), et des orifices radiaux (27, 29) ménagés dans la paroi de la tête et de la tige (19) du clapet principal (14) faisant communiquer l'alésage (14a) de la tête et celui de la tige (19) avec, respectivement, les espaces (28,31) de l'alésage de l'élément tubulaire mobile (7) situés en avant et en arrière du siège (18) du clapet principal (14).

FIG.1

FIG.2

0 265 569

FIG.3

0 265 569

## DOCUMENTS CONSIDERES COMME PERTINENTS

| Catégorie | Citation du document avec indication. en cas de besoin, des parties pertinentes | Revendication concernee | CLASSEMENT DE LA DEMANDE (Int Cl 4) |
|---|---|---|---|
| Y | FR-A-1 237 090 (FLIGHT REFUELLING LTD) * Page 4, colonne de droite, lignes 8-29; figures * | 1 | F 16 L  37/28 |
| A | | 4,5 | |
| | --- | | |
| Y | US-A-3 791 411 (BOGESKOV) * Colonne 5, lignes 1-16; figures * | 1 | |
| A | | 3-5 | |
| | --- | | |
| A | DE-B-1 062 504 (S.A.T.A.M.) * Figures * | 1 | |
| | --- | | DOMAINES TECHNIQUES RECHERCHES (Int Cl 4) |
| E | FR-A-2 582 380 (BADOUREAUX) * Figures * | 1-5 | F 16 L |
| | --- | | |
| A,D | FR-A-2 024 539 (AEROQUIP AG) * Page 6, ligne 7 - page 7, ligne 7; page 8, lignes 31-36; figures * | 1 | |
| | --- | | |
| A | US-A-3 550 624 (JOHNSON) * Colonne 4, ligne 44 - colonne 5, ligne 4; figures * | 1,2 | |
| | ----- | | |

Le present rapport de recherche a été établi pour toutes les revendications

| Lieu de la recherche | Date d'achèvement de la recherche | Examinateur |
|---|---|---|
| LA HAYE | 29-06-1987 | HUBEAU M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

OEB Form 1503 03 82